# EUROPÄISCHE PATENTANMELDUNG

(11) **EP 0 757 267 A2**
(43) Veröffentlichungstag der Anmeldung: **05.02.1997**
(21) Anmeldenummer: 96111566.4
(22) Anmeldetag: 18.07.1996
(51) Int. Cl.: G02B 6/44

(54) **Vorrichtung zur Verbindung von zwei elektrischen Luftkabeln**

(30) Priorität: 29.07.1995 DE 29512268 U
(71) Anmelder: Alcatel Kabel AG & Co., 30179 Hannover (DE)
(72) Erfinder: Grajewski, Franz, Dr.-Ing., 31655 Stadthagen (DE); Stieb, Werner, Dipl.-Ing., 31655 Stadthagen (DE); Wielgolaski, Zbigniew, Dipl.-Ing., 31655 Stadthagen (DE); Jansen, Ulrich, Dipl.-Ing., 41849 Wassenberg (DE); Buchwald, Rudolf, Dipl.-Ing., 91126 Rednitzhembach (DE)

(57) **Zusammenfassung**

Es wird eine Vorrichtung zum Verbinden von zwei elektrischen Luftkabeln mit im Verseilverband von elektrischen Leitern und zugfesten Tragelementen angeordnete Lichtwellenleiterelemente aus optischen Fasern enthaltenden Röhrchen beschrieben. Es sind Mittel zum mechanischen und elektrisch leitenden Verbinden der elektrischen Leiter und zugfesten Tragelemente des jeweiligen Luftkabels sowie ein abgedichtetes Gehäuse zur Aufnahme der Spleißverbindungen der optischen Fasern vorgesehen. Das Gehäuse (5) besteht aus zwei konzentrischen mit Abstand zueinander angeordneten Rohren (7,9), deren Ringspalt an beiden Enden abgedichtet ist. Die optischen Fasern sind durch Bohrungen (12) in der endseitigen Abdichtung (8) in den Ringspalt eingeführt. Die Spleißverbindung sowie eine Vorratslänge der optischen Fasern sind im Ringspalt abgelegt, und das Gehäuse (5) umgibt die Mittel (21,3) zum mechanischen und elektrisch leitenden Verbinden und ist auf den Mitteln (3) bzw. den Luftkabeln (1) festgelegt.

## Beschreibung

Die Erfindung betrifft eine Vorrichtung zur Verbindung von zwei elektrischen Luftkabeln nach dem Oberbegriff des Anspruchs 1.

Aus der DE 42 32 714 ist eine Muffe zur Verbindung von jeweils eine optische Nachrichtenleitung enthaltenden Freileiterseilen bekannt. Die Muffe besteht aus einem Gehäuseronr, welches endseitig zwei metallische Stirnscheiben aufweist. Eine Profilstange durchdringt das Muffengehäuse und ragt aus den Stirnscheiben des Muffengehäuses abgedichtet heraus. Seiladapterhülsen sind abgedichtet in Öffnungen in den Stirnscheiben eingefügt. Außerhalb des Muffengehäuses sind die Seiladapterhülsen, welche das Freileiterseil umfassen, mittels Schalenstromklemmen mit der Profilstange verbunden. Die elektrische Verbindung der Enden der Freileiterseile erfolgt also über die erste Seiladapterhülse, die erste Schalenstromklemme, die Profilstange, die zweite Schalenstromklemme und die zweite Seiladapterhülse.

Die Verbindung der Nachrichtenleitungen erfolgt dadurch, daß die durch die Stirnscheiben im Bereich der Seiladapterhülsen in das Innere des Muffengehäuses hereingeführten Nachrichtenkabel abgemantelt, die optischen Fasern miteinander verspleißt und die Spleißverbindungen in Spleißkassetten abgelegt werden. Eine oder mehrere Spleißkassetten werden auf der Profilstange befestigt.

Bei dieser Muffe ist nachteilig, daß eine Vielzahl von Abdichtungen vorgenommen werden müssen. So sind die Einführungen sowohl der Seiladapterhülsen als auch der Profilstange sowie das auf den Stirnscheiben aufliegende Gehäuserohr gegenüber den Stirnscheiben abzudichten.

Aus der EP 0 548 514 A1 ist eine Verbindungsmuffe für Lichtwellenleiter-Phasenseile bekannt, bei welcher die elektrische Verbindung der Phasenseile über eine mit Seilklemmen an die Freileiterseile angeschlossene Stromschiene erfolgt. Die mit den optischen Fasern versehenen Schutzröhrchen sind in ein Muffengehäuse über Seilverschraubungen zugentlastet und abgedichtet eingeführt. Das Muffengehäuse besteht aus zwei haubenförmigen Gehäusehälften, die über eine flanschartige Erweiterung miteinander verschraubt sind. Im Innern des Muffengehäuses besitzt jede Gehäusehälfte eine Stange, deren Enden miteinander lösbar verbunden sind. Die Stange trägt eine oder mehrere Spleißkassetten, in welchen die Spleißverbindungen sowie die Vorratslängen der optischen Fasern abgelegt sind.

Auch bei dieser Muffe ist die Abdichtung des die Spleißkassetten aufnehmenden Raumes recht aufwendig.

Beiden Muffen ist gemeinsam, daß wegen der Vielzahl der Abdichtungsstellen im Falle einer Zugbelastung diese Muffen undicht werden können. Deshalb sind diese Muffen nur für die Verlegung im zugentlasteten Feldbereich eines Abspannmastes geeignet.

Ein weiterer Nachteil besteht darin, daß die Spleißverbindungen in Spleißkassetten abgelegt werden.

Der vorliegenden Erfindung liegt die Aufgabe zugrunde, eine Vorrichtung zur Verbindung von elektrischen Luftkabeln anzugeben, welche einfach herzustellen ist und deren Abdichtungen so ausgestaltet sind, daß auch bei einer Zugbelastung kein Undichcwerden auftritt. Weiterhin soll auf die Verwendung von Spleißkassetten verzichtet werden. Darüberhinaus soll die Vorrichtung so ausgestaltet sein, daß eine Anordnung der Vorrichtung auch zwischen den Masten möglich ist.

Diese Aufgabe wird durch die im Kennzeichen des Anspruchs 1 erfaßten Merkmale gelöst.

Ein wesentlicher Vorteil der Erfindung besteht darin, daß auf Verbindungsarmaturen, die bei der Verlegung von Seilen zum Stand der Technik gehören, zurückgegriffen werden kann.

Die Erfindung macht es möglich, daß auf die Streckenführung keine Rücksicht genommen werden muß, und die Vorrichtung an jeder beliebigen Stelle der Seiltrasse vorgesehen werden kann.

Weitere vorteilhafte Ausgestaltungen der Erfindung sind in den Unteransprüchen erfaßt sowie in der nachfolgenden Beschreibung dargelegt.

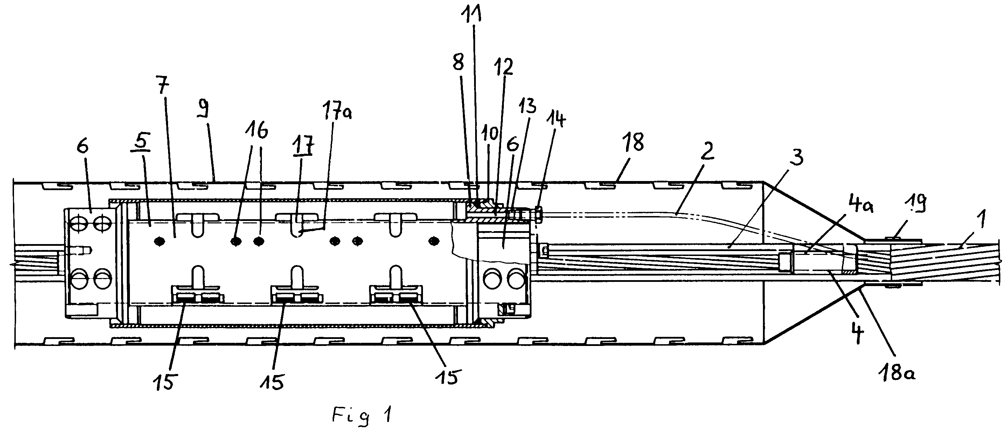

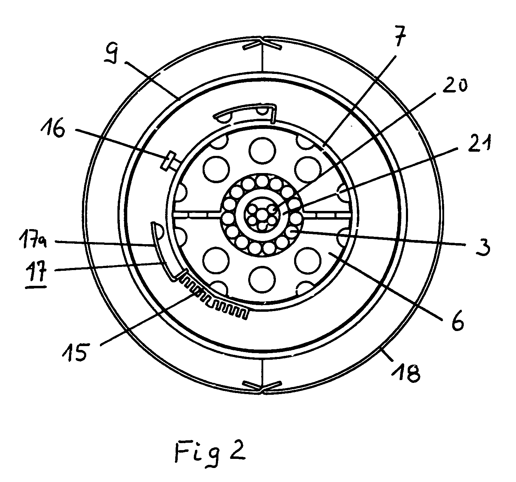

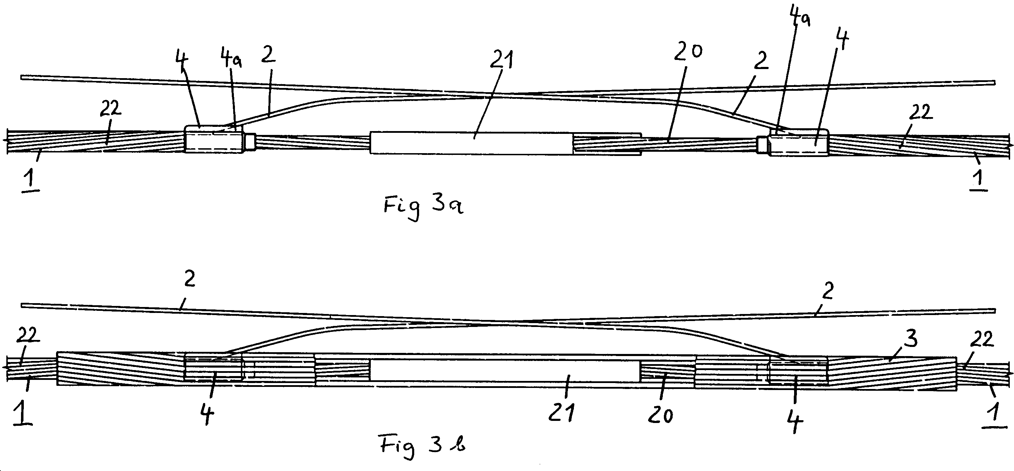

Die Erfindung ist anhand der in den Figuren 1 bis 3 schematisch dargestollten Ausführungsbeispiele näher erläutert.

In Figur 1 ist die rechte Hälfte einer Muffe für ein sogenanntes Lichtwellenleiter-Erdseil 1 dargestellt. Ein solches Erdseil besteht üblicherweise aus einer Seele aus einem zentral gelegenen Stahldraht, auf welchen z. B. fünf weitere Stahldrähte, sowie ein Rohr 2 aus Edelstahl mit mindestens einem darin angeordneten Lichtwellenleiter aufgeseilt sind. Das Edelstahlrohr 2 - ein längsnahtgeschweißtes Edelstahlröhrchen mit dem gleichen Außendurchmesser wie die Stahldrähte - ersetzt bei dieser Konstruktion einen der Stahldrähte der ersten Verseillage. Bei den Stahldrähten handelt es sich um sogenannte Stalumdrähte, d. h. mit einer Aluminiumschicht versehene Stahldrähte. Auf diese Stahldrahtlage sind z. B. zwölf Aluminiumdrähte aufgeseilt.

Zur Verbindung zweier solcher Erdseile wird die Aluminiumdrahtlage abgesetzt, das Edelstahlröhrchen 2 aus der Stahldrahtlage herausgeführt und die übrigen Stahldrähte gekürzt, so daß das Edelstahlröhrchen 2 mit den darin befindlichen Lichtwellenleitern über das Ende des Erdseils 1 hinausragt.

Die beiden aus den Stahldrähten bestehenden Seelen der zu verbindenden Erdseile 1 werden mit einem in Figur 1 nicht dargestellten Preßverbinder oder einer zugfesten Spiralarmatur verbunden, wie sie aus der Seiltechnik bekannt sind.

Die Lage aus Aluminiumdrähten wird mit einer Aluminiumspirale 3 verbunden, deren einzelne Stäbe zwischen den Enden der Aluminiumdrahtlage der Erdseile 1 parallel zur Längsachse der Erdseile 1 verlaufen. Ein Aluminiumstab fehlt zur vollständigen Überdeckung, so daß das Edelstahlröhrchen 2 herausgeführt werden kann. Zu diesem Zweck ist auf die Aluminiumspirale 3 ein Führungsring 4 aufgeschoben, der über eine bestimmte Länge einen Längsschlitz 4a aufweist, in welchem das Edelstahlröhrchen 2 herausgeführt ist.

Auf die Aluminiumspirale 3 ist der sogenannte Spleißträger 5 mittels zweier Schellen 6 aufgespannt. Der Spleißträger 5 besteht aus einem Innenrohr 7, welches an beiden Enden einen Flansch 8 aufweist, sowie einem auf den Flanschen 8 aufsitzenden Außenrohr 9. Das Außenrohr 9 ist verschieblich auf den Flanschen 8 angeordnet, so daß der durch das Innenrohr 7, das Außenrohr 9 und die Flansche 8 abgedichtete Ringspalt von außen zugänglich gemacht werden kann. Die Abdichtung zwischen Außenrohr 9 und Flansch 8 erfolgt durch einen Spannring 10, der auf einen Dichtungsring 11 wirkt.

Die Flansche 8 weisen eine Längsbohrung 12 auf, durch welche die im Edelstahlröhrchen 2 befindlichen Lichtwellenleiter in den Ringspalt hereingeführt werden können. Das Edelstahlröhrchen 2 ist gegenüber den Lichtwellenleitern abgesetzt und mittels einer Rohrverschraubung 13,14 im Eingangsbereich der Längsbohrung abgedichtet festgelegt.

Auf der Oberfläche des Innenrohres 7 sind mehrere Spleißkämme 15 befestigt, in denen die Faserspleiße der Lichtwellenleiter abgelegt werden können. Ebenfalls auf der Oberfläche des Innenrohres 7 sind zu jedem Spleißkamm 15 gehörig zwei Distanzbolzen 16 befestigt, um welche der Lichtwellenleitervorrat herumgelegt ist.

Weiterhin ist zu jedem Spleißkamm 15 ein sogenannter Finger 17 zugehörig, die ebenfalls auf der Innenrohroberfläche 7 befestigt sind. Diese Finger 17 weisen einen Bereich 17a auf, der zwischen sich und der Innenrohroberfläche 7 einen Spalt bildet, in welchen die Windungen des jeweiligen Lichtwellenleitervorrats eingelegt werden, um sie auf der gekrümmten Oberfläche des Innenrohres 7 zu haltern. Die Lichtwellenleitervorräte sind also in einer gekrümmten Ebene abgelegt.

Der Spleißträger 5 ist von einem Schutzgehäuse 18 umgeben, dessen Enden 18a mittels Klemmschellen 19 auf dem Erdseil 1 bzw. der Aluminiumspirale 3 festgelegt sind. Das Schutzgehäuse 18 kann aus zwei Halbschalen bestehen, die an ihren längsverlaufenden Berührungsflächen abgedichtet sind. Das Schutzgehäuse 18 kann aber auch aus zumindest zwei quer zur Längsrichtung des Erdseils 1 geteilten Gehäusehälften bectehen, die beispielsweise zusammengeschraubt sind.

Innenrohr 7, Außenrohr 9 sowie das Schutzgehäuse 18 bestehen vorteilhafterweise aus Metall, zweckmäßigerweise aus nichtrostendem Stahl. Die auf der Oberfläche des Innenrohres 7 befestigten Spleißkämme 15, Distanzbolzen 16 und Finger 17 sind vorteilhafterweise aus die Oberfläche aufgelötet oder in entsprechende Bohrungen dicht eingelötet oder eingeschweißt.

Der die Lichtwellenleiterspleiße aufnehmende Spalt zwischen dem Innenrohr 7 und dem Außenrohr 9 ist feuchtigkeitsdicht abgeschlossen. Die mechanischen Kräfte werden weitestgehend durch den Preßverbinder bzw. die Verbindungsspirale aufgenommen. Die Aluminiumspirale 3 sorgt für eine elektrisch leitende Durchverbindung der Aluminiumdrähte.

Figur 2 zeigt einen Schnitt durch die Mitte der Muffe.

Die Stalumdrähte 20 sind von den Preßverbinder 21 umgeben. Über dem Preßverbinder 21 liegen die Stäbe der Aluminiumspirale 3.

Der nicht dargestellte Faservorrat wird durch die Finger 17 und die Distanzbolzen 16 auf der gekrümmten Oberfläche des Innenrohres 7 festgelegt.

Die Figuren 3a und 3b zeigen die Verbindung der Stalumdrähte 20 mittels des Preßverbinders 21 sowie die Verbindung der Aluminiumdrähte 22 mittels der Aluminiumspirale 3.

Die Edelstahlröhrchen 2 sind aus den durch die Stalumdrähte 20 gebildeten Seelen herausgeführt und weisen eine größere Länge auf, die durch entsprechendes Kürzen der Erdseile 1 erzeugt wird.

## Patentansprüche

1. Vorrichtung zum Verbinden von zwei elektrischen Luftkabeln mit im Verseilverband von elektrischen Leitern und zugfesten Tragelementen angeordnete Lichtwellenleiterelemente aus optischen Fasern enthaltenden Röhrchen, mit Mitteln zum mechanischen und elektrisch leitenden Verbinden der elektrischen Leiter und zugfesten Tragelemente des jeweiligen Luftkabels sowie einem abgedichteten Gehäuses zur Aufnahme der Spleißverbindungen der optischen Fasern, dadurch gekennzeichnet, daß das Gehäuse (5) aus zwei konzentrischen mit Abstand zueinander angeordneten Rohren (7,9) besteht, deren Ringspalt an beiden Enden abgedichtet ist, daß die optischen Fasern durch Bohrungen (12) in der endseitigen Abdichtung (8) in den Ringspalt eingeführt sind und daß die Spleißverbindung sowie eine Vorratslänge der optischen Fasern im Ringspalt abgelegt sind und daß das Gehäuse (5) die Mittel (21,3) zum mechanischen und elektrisch leitenden Verbinden umgibt und auf den Mitteln (3) bzw. den Luftkabeln (1) festgelegt ist.

2. Vorrichtung nach Anspruch 1, dadurch gekennzeichnet, daß bei Luftkabeln mit einer Seele aus zugfesten Tragelementen (20) und einer oder mehreren Lagen aus die Seele umgebenden elektrischen Leitern (22) die zugfesten Tragelemente (20) durch einen Preßverbinder (21) oder eine zugfeste Spiralarmatur mechanisch fest verbunden sind, und die elektrischen Leiter durch eine Aluminiumspirale (3) elektrisch leitend verbunden sind.

3. Vorrichtung nach Anspruch 1 oder 2, dadurch gekennzeichnet, daß die Bohrungen (12) für die Einführung der optischen Fasern mittels einer Kabelverschraubung (13,14) oder einem Schrumpfschlauch abgedichtet sind.

4. Vorrichtung nach einem der Ansprüche 1 bis 3, dadurch gekennzeichnet, daß das Äußere (9) der konzentrischen Rohre in Längsrichtung unter Freigabe des Ringspaltes verschiebbar und mittels Gummiringen (11) abgedichtet ist.

5. Vorrichtung nach einem der Ansprüche 1 bis 4, dadurch gekennzeichnet, daß das Gehäuse (5) von einem metallischen Schutzgehäuse (18) mit Abstand umgeben ist, welches an seinen Enden (18a) konisch zuläuft und endseitig auf den Luftkabeln (1) aufliegt und dort mittels Klemmschellen (19) festgelegt ist.

6. Vorrichtung nach Anspruch 5, dadurch gekennzeichnet, daß das Schutzgehäuse (18) aus einem zylindrischen Metallrohr besteht, in bzw. auf dessen Enden je eine Konushaube ein- oder aufgeschraubt ist.

7. Vorrichtung nach einem der Ansprüche 1 bis 6, dadurch gekennzeichnet, daß auf der von den elektrischen Leitern freigelegten Seele ein Führungsring (4) aufsitzt, der über eine bestimmte Länge einen Schlitz (4a) aufweist und daß das die Faser(n) enthaltende Röhrchen (2) durch den Schlitz (4a) aus der Seele herausgeführt ist.

8. Vorrichtung nach einem der Ansprüche 1 bis 7, dadurch gekennzeichnet, daß auf dem Inneren (7) der konzentrischen Rohre des Gehäuses (5) zumindest ein Spleißkamm (15) befestigt ist.

9. Vorrichtung nach Anspruch 8, dadurch gekennzeichnet, daß der Spleißkamm (15) entsprechend der Mantelfläche des Rohres (7) gekrümmt ist.

10. Vorrichtung nach einem der Ansprüche 1 bis 9, dadurch gekennzeichnet, daß auf der Oberfläche des Inneren (7) der konzentrischen Rohre des Gehäuses (5) mehrere Distanzbolzen (16) sowie mehrere Führungsfinger (17) befestigt sind.
